# EUROPEAN PATENT SPECIFICATION

(11) **EP 0 933 545 B1**
(45) Date of publication and mention of the grant of the patent: **04.01.2006**
(21) Application number: 99300719.4
(22) Date of filing: 01.02.1999
(51) Int. Cl.: F16C 33/76, F16C 23/08, F16C 33/74

(54) **Bearing assembly with housing cap and seal**
Dispositif de palier avec un chapeau de carter et une étanchéité
Lagervorrichtung mit einer Gehäusekappe und einer Dichtung

(30) Priority: 31.01.1998 US 17106
(43) Date of publication of application: 04.08.1999
(73) Proprietor: THE TORRINGTON COMPANY, Torrington, Connecticut 06790 (US)
(72) Inventor: Thibault, James, Torrington, CT 06790 (US)
(74) Representative: Feakins, Graham Allan

(56) References cited:
- DE-C- 3 708 815
- US-A- 4 025 079
- US-A- 4 411 437
- US-A- 4 881 829
- US-A- 5 026 252
- US-A- 5 259 628

## Description

This invention relates generally to self-aligning bearings and, more particularly, to self-aligning bearing assemblies with shields or seals suitable for applications characterised by harsh, highly abrasive environments.

A self-aligning bearing corresponding to the preamble of claim 1 is known, for example, from GB-A-2 142 990.

One such application is that of mounting the auger of asphalt road paving equipment. Bearing assemblies in that application are constantly exposed to highly abrasive asphalt mixtures and high temperatures and are frequently subjected to petroleum based solvent wash-downs. Current paver bearing assemblies use a shaft mounted shield to protect them from asphalt intrusion. Those shields quickly deteriorate due to the constant abrasion of the shield rotating through the asphalt mixture. Once the outer shield has worn, contamination penetrates the interior of the bearing and failure is rapid. Additionally, it is difficult positively to seal the rotating shield against the bearing. This lack of positive sealing allows a path for contamination to enter the bearing assembly.

Document US-A-4 411 437 discloses a self-aligning bearing assembly according to the preamble of claim 1, except that the annular housing is mounted in the axial end of the bearing housing, in which a plurality of flat metal sealing washers stacked in face-to-face contact and having the same internal and external diameter is located within the annular groove of the annular housing, the inside diameter of the washers being slightly larger than the diameter of the bearing inner ring so that a clearance is provided between them when the shaft is in its normal aligned position. The sealing washers are held together with the flat sides in contact with one another by a resilient wave washer disposed between the stack of sealing washers and the side of the annular groove, thereby applying a constant pressure on the stack of washers to hold the washers in firm contact with the side of the annular groove. The dimensions of the outer diameter of the sealing washers and the depth of the annular groove are such that the sealing washers are capable of sliding radially relative to one another in order to permit the bearing to adjust to misalignment of the shaft relative to the housing. Due to the clearance between the inside diameter of the washers and the bearing inner ring there is allowed a path for contamination to enter the bearing assembly.

Document DE-C-3 708 815 discloses a bearing assembly with a seal suitable for use in harsh environments such as those encountered by railway vehicles and which also accommodates axial movement of the shaft relative to the housing. In one embodiment the seal comprises a plurality of split laminar rings located within an annular groove provided in an inner ring fixed to the shaft, a pair of split laminar rings being lightly spring-loaded radially inwardly for biased engagement with the inner ring sandwiched between two pairs of split laminar rings each being lightly spring-loaded radially outwardly against the housing. The light spring loading being sufficient to ensure that under normal temperature conditions the rings remain fixed to the part against which they are spring-loaded, i.e. either the housing or the inner ring. There is no recognition in this document of the potential of using this type of seal in a self-aligning bearing, in which the seal must have flexibility in the radial direction to account for the radial adjustment of the bearing.

The problem underlying the present invention is to provide a self-aligning bearing assembly, in which particular sealing means are disposed in the annular groove of the housing cap which provide improved sealing whilst still allowing the bearing to adjust to misalignment of the shaft relative to the housing.

According to the present invention, there is provided a self-aligning bearing assembly for mounting over a shaft, the bearing assembly comprising a bearing housing having a spherically concave bore; a bearing having a spherically convex radially outer surface pivotably mounted in the concave bore; and an annular housing cap mounted against an axial end of the bearing housing, the housing cap having a radially inwardly directed annular groove and providing clearance with respect to the shaft or a bearing inner ring mountable over the shaft such that pivoting of the bearing within the housing is permitted; characterised by a plurality of split laminar rings located within the annular groove of the housing cap, at least two of the split laminar rings being spring-loaded radially inwardly for biassed engagement with the shaft or bearing inner ring.

For a better understanding of the invention and to show how the same may be carried into effect, reference will now be made, by way of example to the accompanying drawings, in which:-
Fig. 1 is a cross-sectional side view illustrating a known bearing assembly as used with current road paving equipment;
Fig. 2 is a cross-sectional side view illustrating a first embodiment of the present self-aligning bearing assembly, taken along the line 2-2 of Fig. 3;
Fig. 3 is an end view illustrating the self-aligning bearing assembly of Fig. 2;
Fig. 4 is a cross-sectional side view illustrating a second embodiment of the present self-aligning bearing assembly, taken along the line 4-4 of Fig. 5; and
Fig. 5 is an end view illustrating the self-aligning bearing assembly of Fig. 4.

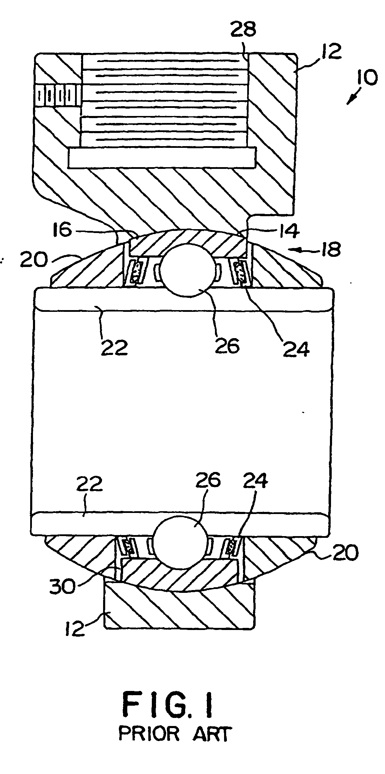

Referring to the drawings, Figure 1 illustrates a known bearing assembly 10, as used to support an auger in current asphalt road paving equipment. A bearing housing 12 has a spherically concave bore 14 for supporting a spherically convex surface of a bearing outer ring 16 of a self-aligning bearing 18. A metal shield 20 is pressed on a wide bearing inner ring 22 to provide protection for a bearing seal 24 and rolling elements 26.

In this known design, the metal shield 20 rotates with the shaft over which the bearing is mounted. As a result, the metal shield 20 constantly rotates through the asphalt mixture that is being moved along the shaft by the blades of the auger. The bearing housing 12 is stationary, mounted on the road paving equipment by means of a threaded receptacle 28. Due to rotation of the metal shield 20 with respect to bearing outer ring 16 and bearing housing 12, gaps 30 are provided, resulting in contamination penetrating to the bearing seal 24 and rapidly progressing to the rolling elements 26, causing failure. Significantly, there is no protection for the surfaces providing the pivoting movement between the spherically self-aligning bearing 18 and bearing housing 12.

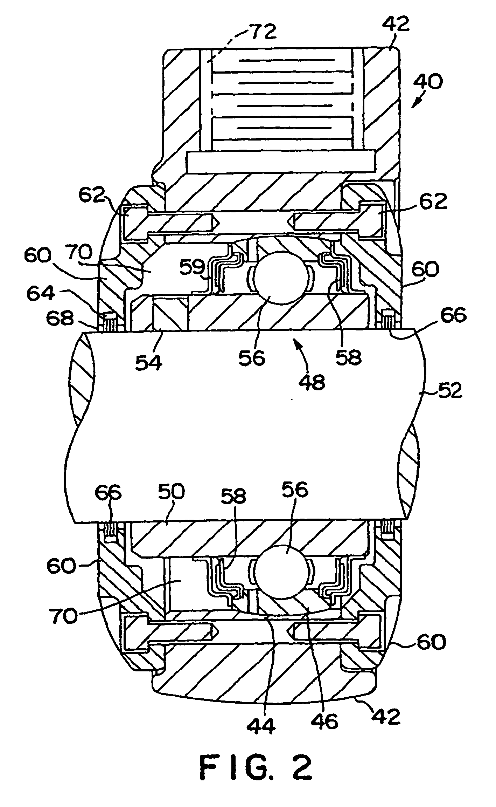

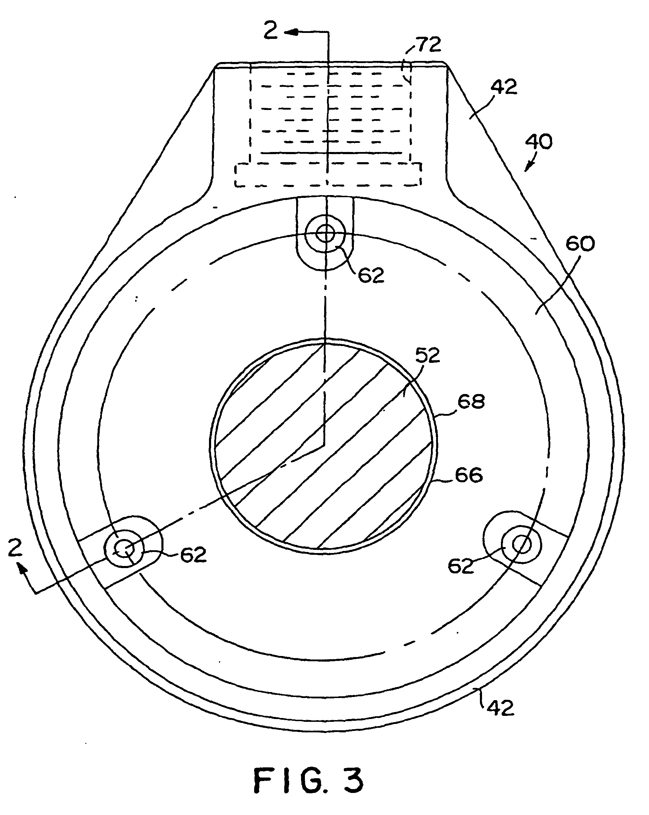

Figures 2 and 3 illustrate a bearing assembly 40, a first embodiment of the present bearing assembly that could be used in an application similar to that of the bearing assembly 10. A bearing housing 42 has aspherically concave bore 44 for supporting a spherically convex surface of a bearing outer ring 46 of aself-aligning bearing 48. A wide bearing inner ring 50 is mounted on a rotatable shaft 52 by a set screw 54. Rolling elements 56 roll in raceways of bearing outer and inner rings 46 and 50 and are protected by multi-piece bearing seals 58 that include an outboard flinger 59 mounted on the bearing inner ring 50.

Annular housing caps 60 are mounted against axial ends of the bearing housing 42 by cap screws 62 or other means and includes a radially inwardly directed groove 64. At least two split laminar rings 66 are located within the annular groove 64, the rings being spring-loaded radially inwardly for biassed engagement with the rotatable shaft 52. Additional split laminar rings may be provided for biassed engagement with either the bearing caps 60 or rotatable shaft 52. A central bore 68 of the bearing cap 60 and annular groove 64 provide sufficient clearance with respect to the rotatable shaft 52 and split laminar rings 66 to allow pivoting of the bearing outer ring 46 relative to the bearing housing 42.

The annular groove 64 and split laminar rings 66 provide a barrier restricting contamination to an interior portion 70. Unlike traditional labyrinth type seals, they accommodate the required self-aligning motion of the bearing 48. Significantly, the bearing caps 60 are stationary; they are not fixed to the rotatable shaft and do not rotate through the asphalt mixture. The bearing caps 60 provide protection for the spherically concave surface 44 of the bearing housing 42 and the corresponding spherically convex surfaces of bearing outer ring 46. This protection is in addition to that provided for the bearing seals 58 and rolling elements 56. The bearing housing 42 is mounted by a threaded receptacle 72.

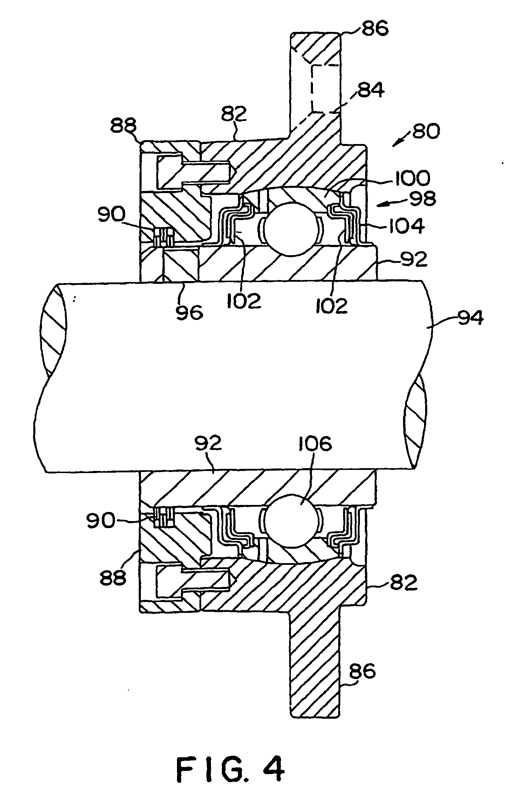

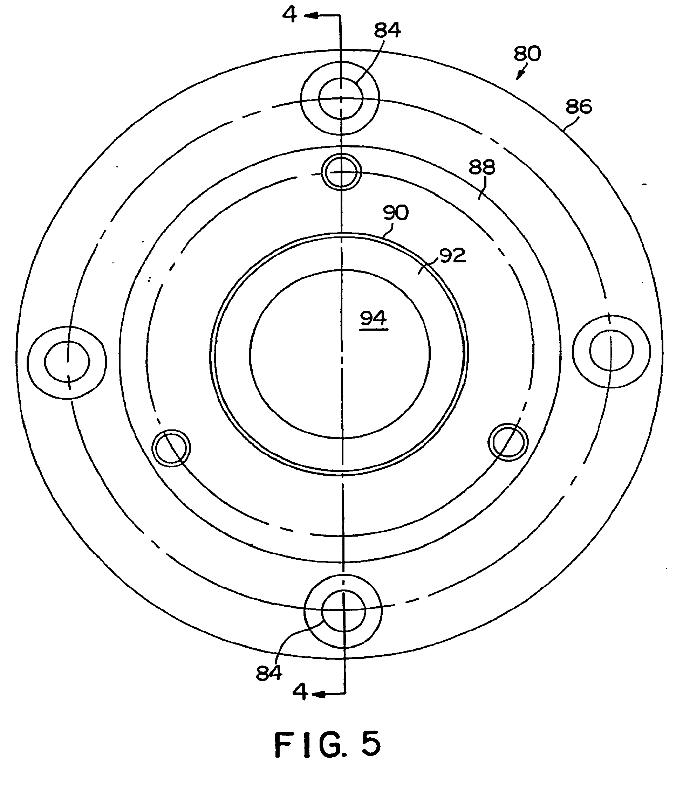

Figures 4 and 5 illustrate a second embodiment similar to that of Figures 2 and 3 but having a bearing assembly 80 in a bearing housing 82 that is mounted by bolts or screws in apertures 84 of an annular mounting flange 86. Only a single bearing cap 88, similar to the bearing caps 60, is necessary, because the structure upon which bearing housing 82 is mounted provides protection from the other side of the bearing assembly 80. This embodiment illustrates that split laminar rings 90 may include radially outwardly directed spring-loading that provides biassed contact with the bearing cap 88.

In the embodiment of Figures 4 and 5, the split laminar rings 90 are biassed radially inwardly against a wide bearing inner ring 92, rather than against the rotatable shaft 94. The effect is similar, since the wide bearing inner ring 92 is fixed to the rotatable shaft 94 by a set screw 96 or other means. A self-aligning bearing 98 includes a bearing outer ring 100, multi-piece bearing seals 102 with flinger 104, and rolling elements 106, each similar to those of the embodiment of Figures 2 and 3.

The bearing assembly is applicable to a wide range of bearing configurations suitable for various applications that require protection for a self-aligning bearing. For example, the self-aligning bearing may be a plain bearing with no rolling elements or may be a rolling element bearing with no bearing inner ring, the rolling elements rolling directly on raceways provided on the rotatable shaft. Note that the embodiment of Figures 4 and 5 may be thought of as having a self-aligning rolling element bearing with no bearing inner raceway, with the split laminar rings biased radially inwardly against the rotatable shaft, the rotatable shaft being hollow.

From the above description, it will be apparent that the present self-aligning bearing assembly provides a greatly improved resistance to abrasion, high temperature and solvent. The disclosed configuration is particularly suitable for harsh applications such as, for example, mounting of augers of asphalt road paving equipment, and may be adapted to many other applications.

## Claims

1. A self-aligning bearing assembly (40) for mounting over a shaft (52), the bearing assembly comprising a bearing housing (42) having a spherically concave bore (44); a bearing (48) having a spherically convex radially outer surface pivotably mounted in the concave bore (44); and an annular housing cap (60) mounted against an axial end of the bearing housing, the housing cap having a radially inwardly directed annular groove (64) and providing clearance with respect to the shaft or a bearing inner ring (92) mountable over the shaft such that pivoting of the bearing within the housing is permitted; **characterised by** a plurality of split laminar rings (66) located within the annular groove (64) of the housing cap (60), at least two of the split laminar rings (66) being spring-loaded radially inwardly for biassed engagement with the shaft (52) or bearing inner ring (92).

2. An assembly according to claim 1, wherein the bearing includes an outer ring (46) providing the spherically convex outer surface, a said inner ring to be positioned over the shaft (52), and rolling elements (56) therebetween.

3. An assembly according to claim 1, wherein the bearing includes an outer ring and rolling elements (56), and wherein the rotatable shaft includes an inner raceway for the rolling elements.

4. An assembly according to claim 2 or 3, wherein the bearing includes a bearing seal (58) mounted on the outer ring (46) and on the shaft (52) for retaining lubricant within the bearing and for preventing contamination of the bearing.

5. An assembly according to any one of the preceding claims, wherein at least one of the split laminar rings (66) is spring-loaded such that it is biassed radially outwardly against the housing cap (60).

6. An assembly according to any one of the preceding claims and further comprising a second annular housing cap (60) mounted against a second axial end of the bearing housing (42), the second housing cap having a radially inwardly directed second annular groove (64) and providing clearance with respect to the shaft (52) such that pivoting of the bearing within the housing is permitted, and there being a plurality of said split laminar rings (66) located within the second annular groove (64).

7. An assembly according to any one of the preceding claims, wherein the bearing housing includes an annular flange (86) for mounting of the bearing housing.

8. An assembly according to any one of claims 1 to 6, wherein the bearing housing includes a radially directed threaded bore (72) for mounting of the bearing housing.

## Patentansprüche

1. Selbstausrichtende Lageranordnung (40) zur Montage über einer Welle (52), wobei die Lageranordnung ein Lagergehäuse (42) aufweist, das eine sphärisch-konkave Bohrung (44) hat; wobei ein Lager (48) eine sphärisch-konvexe radial äußere Oberfläche hat, die schwenkbar in der konkaven Bohrung (44) angebracht ist; und wobei eine ringförmige Gehäusekappe (60) gegenüber einem axialen Ende des Lagergehäuses angebracht ist, wobei die Gehäusekappe eine radial nach innen gerichtete ringförmige Nut (64) hat und einen Freiraum in Bezug auf die Welle oder einen inneren Lagerring (92) bietet, der über der Welle angebracht werden kann, so daß ein Verschwenken des Lagers innerhalb des Gehäuses zugelassen ist; **gekennzeichnet durch** eine Vielzahl von geteilten lamellaren Ringen (66), die innerhalb der ringförmigen Nut (64) der Gehäusekappe (60) angeordnet sind, wobei wenigstens zwei der geteilten lamellaren Ringe (66) radial nach innen federbelastet sind für einen vorgespannten Eingriff mit der Welle (52) oder dem inneren Lagerring (92).

2. Anordnung nach Anspruch 1, bei der das Lager einen äußeren Ring (46) aufweist, der die sphärisch-konvexe äußere Oberfläche bietet, wobei ein innerer Ring über der Welle (52) und Wälzelemente (56) dazwischen anzuordnen sind.

3. Anordnung nach Anspruch 1, bei der das Lager einen äußeren Ring und Wälzelemente (56) aufweist und wobei die drehbare Welle eine innere Laufbahn für die Wälzelemente aufweist.

4. Anordnung nach Anspruch 2 oder 3, bei der das Lager eine Lagerdichtung (58) aufweist, die an dem äußeren Ring (46) und an der Welle (52) angebracht ist, um Schmiermittel innerhalb des Lagers zurückzuhalten und eine Verunreinigung des Lagers zu verhindern.

5. Anordnung nach einem der vorhergehenden Ansprüche, bei der wenigstens einer der geteilten lamellaren Ringe (66) derart federbelastet ist, daß er radial nach außen gegen die Gehäusekappe (60) vorgespannt ist.

6. Anordnung nach einem der vorhergehenden Ansprüche, die ferner eine zweite ringförmige Gehäusekappe (60) aufweist, die gegenüber einem zweiten axialen Ende des Lagergehäuses (42) angebracht ist, wobei die zweite Gehäusekappe eine radial nach innen gerichtete zweite ringförmige Nut (64) hat und einen Freiraum in Bezug auf die Welle (52) bietet, so daß ein Verschwenken des Lagers innerhalb des Gehäuses zugelassen ist, und wobei eine Vielzahl der geteilten lamellaren Ringe (66) innerhalb der zweiten ringförmigen Nut (64) angeordnet ist.

7. Anordnung nach einem der vorhergehenden Ansprüche, bei der das Lagergehäuse einen ringförmigen Flansch (86) zum Montieren des Lagergehäuses aufweist.

8. Anordnung nach einem der Ansprüche 1 bis 6, bei der das Lagergehäuse eine radial gerichtete Gewindebohrung (72) zum Montieren des Lagergehäuses aufweist.

## Revendications

1. Ensemble de palier à alignement automatique (40) destiné au montage sur un arbre (52), cet ensemble de palier comprenant un logement de palier (42) présentant un alésage sphériquement concave (44) ; un palier (48) présentant une surface externe sphériquement convexe dans le sens radial monté de façon à pivoter dans l'alésage concave (44) ; et un bouchon de logement annulaire (60) monté contre une extrémité axiale du logement de palier, ce bouchon de logement présentant une rainure annulaire orientée vers l'intérieur dans le sens radial (64) et préservant un espacement par rapport à l'arbre ou à une bague interne de palier (92) pouvant être montée sur l'arbre, de façon à permettre le pivotement du palier à l'intérieur du logement ; **caractérisé par** une pluralité de bagues laminaires fendues (66) se trouvant dans la rainure annulaire (64) du bouchon du logement (60), au moins deux de ces bagues laminaires fendues (66) étant comprimées par un ressort vers l'intérieur dans le sens radial pour venir en prise par poussée avec l'arbre (52) ou avec la bague interne de palier (92).

2. Ensemble selon la revendication 1, dans lequel le palier comprend une bague externe (46) constituant la surface externe sphériquement convexe, une dite bague interne devant être positionnée sur l'arbre (52), et des éléments roulants (56) entre les deux.

3. Ensemble selon la revendication 1, dans lequel le papier comprend une bague externe et des éléments roulants (56), et dans lequel l'arbre rotatif comprend un chemin de roulement interne pour les éléments roulants.

4. Ensemble selon la revendication 2 ou 3, dans lequel le palier comprend un joint de palier (58) monté sur la bague externe (46) et sur l'arbre (52), pour retenir du lubrifiant dans le palier et pour éviter la contamination du palier.

5. Ensemble selon l'une quelconque des revendications précédentes, dans lequel au moins une des bagues laminaires fendues (66) est comprimée par un ressort de façon à être poussée vers l'extérieur contre le bouchon de logement (60).

6. Ensemble selon l'une quelconque des revendications précédentes comprenant en outre un second bouchon de palier annulaire (60) monté contre une seconde extrémité axiale du logement de palier (42), ce second bouchon de logement présentant une seconde rainure annulaire orientée vers l'intérieur dans le sens radial (64) et préservant un espacement par rapport à l'arbre (52) de façon à permettre le pivotement du palier à l'intérieur du logement, et une pluralité desdites bagues laminaires fendues (66) se trouvant à l'intérieur de la seconde rainure annulaire (64).

7. Ensemble selon l'une quelconque des revendications précédentes, dans lequel le logement de palier comprend une bride annulaire (86) pour le montage du logement de palier.

8. Ensemble selon l'une quelconque des revendications 1 à 6, dans lequel le logement de palier comprend un alésage fileté orienté dans le sens radial (72) pour le montage du logement de palier.
